# EUROPÄISCHE PATENTSCHRIFT

(11) **EP 3 550 805 B1**
(45) Veröffentlichungstag und Bekanntmachung des Hinweises auf die Patenterteilung: **29.11.2023**
(21) Anmeldenummer: 19166769.0
(22) Anmeldetag: 02.04.2019
(51) Int. Cl.: G01D 4/00, G01D 9/00, G01D 21/00, H04L 67/12, H04L 67/5651, H04L 67/568, H04Q 9/00

(54) **VERFAHREN ZUM BETRIEB EINES VERBRAUCHSDATENERFASSUNGSSYSTEMS UND VERBRAUCHSDATENERFASSUNGSSYSTEM**
METHOD FOR OPERATING A CONSUMPTION DATA COLLECTION SYSTEM AND CONSUMPTION DATA COLLECTION SYSTEM
PROCÉDÉ DE FONCTIONNEMENT D'UN SYSTÈME DE COLLECTE DE DONNÉES DE CONSOMMATION ET SYSTÈME DE COLLECTE DE DONNÉES DE CONSOMMATION

(30) Priorität: 07.04.2018 DE 102018002822
(43) Veröffentlichungstag der Anmeldung: 09.10.2019
(73) Patentinhaber: Diehl Metering Systems GmbH, 90451 Nürnberg (DE)
(72) Erfinder: Schmidt, Achim, 91367 Weißenohe (DE); Blank, Thomas, 91732 Merkendorf (DE); Joppich-Dohlus, Petra, 91080 Rathsberg (DE); Schmitz, Stefan, 90455 Nürnberg (DE)
(74) Vertreter: Diehl Patentabteilung

(56) Entgegenhaltungen:
- DE-A1- 10 152 554
- DE-A1-102012 203 518
- US-A1- 2012 084 554
- Anonymous: "Smart meter - Wikipedia", , 5 April 2018 (2018-04-05), pages 1-28, XP093006403, Retrieved from the Internet: URL:https://en.wikipedia.org/w/index.php?t itle=Smart_meter&oldid=834464539 [retrieved on 2022-12-09]

## Beschreibung

Die vorliegende Erfindung betrifft ein Verfahren zum Betrieb eines Verbrauchsdatenerfassungssystems gemäß dem Oberbegriff des Anspruchs 1. Ferner betrifft die vorliegende Erfindung ein System umfassend einen Verbrauchszähler sowie einen Datensammler gemäß dem Oberbegriff des Anspruchs 8.

### Technologischer Hintergrund

Die Datenübertragung von Messeinheiten, wie z. B. Sensoren, Verbrauchsmessern bzw. Verbrauchszählern oder Komponenten von Smart-Home-Steuerungen, gewinnt im täglichen Gebrauch zunehmend an Bedeutung. Ein wichtiger Anwendungsbereich von Messeinheiten ist der Einsatz von intelligenten Verbrauchszählern, sogenannten Smart Metern. Diese sind in der Regel in ein Versorgungsnetz eingebundene Verbrauchszähler, z. B. für Energie, Strom, Gas oder Wasser, die dem jeweiligen Anschlussbenutzer den tatsächlichen Verbrauch anzeigen und ein Kommunikationsnetz zur Übertragung der Verbrauchsdaten an den Versorger nutzen. Intelligente Verbrauchszähler haben den Vorteil, dass manuelle Ablesungen der Zählerstände entfallen und seitens des Versorgers kurzfristigere Rechnungstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können die Versorgungsnetze wesentlich besser ausgelastet werden.

Gattungsgemäße Verbrauchszähler übertragen die anfallenden Messdaten in der Regel in Form von Datenpaketen oder Datentelegrammen per Funk, beispielsweise im SRD (Short Range Devices)- oder ISM (Industrial, Scientific, Medical)-Frequenzbereich. Datentelegramme sind in der Regel aus einer Mehrzahl von Datenpaketen aufgebaut. Die SRD- oder ISM-Frequenzbereiche haben den Vorteil, dass diese lizenzfrei sind und für die Nutzung lediglich eine allgemeine Zulassung der Frequenzverwaltung notwendig ist.

Elektronische Verbrauchszähler mit Funksender für drahtlose Datenübertragung werden häufig für eine Walk-In-, Walk-By-, Drive-By- oder Fly-By-Ablesung verwendet. Hierfür werden die Erfassungsgeräte mittels eines mobilen Funkempfängers durch Kundendienstpersonal von einem Fahrzeug aus (Drive-By) im Vorbeifahren oder zu Fuß (Walk-By) im Vorbeigehen abgelesen, ohne dass das Gebäude betreten werden muss. Bei den intelligenten Verbrauchszählern ist zum einen der Energieverbrauch, da diese meist batteriebetrieben sind und möglichst lange Wartungsintervalle aufweisen sollen, und zum anderen die Betriebssicherheit von entscheidender Bedeutung. Bei den obigen Ableseverfahren werden häufig über das ganze Jahr hinweg Funktelegramme ausgesendet, die zur Stromersparnis sehr kurz sind, so dass ein häufiges Senden über einen langen Zeitraum möglich ist.

Zur Erfassung der Verbrauchsdaten werden zunehmend intelligente Messinfrastrukturen eingesetzt. In diesen Messinfrastrukturen (Verbrauchsdatenerfassungssysteme) stellen die Verbrauchszähler die Endgeräte dar, durch die an den Messstellen Verbrauchsdaten aufgenommen werden. Die Messdaten werden digital von den Verbrauchszählern an ein übergeordnetes Managementsystem bzw. Head-End-System übertragen. Das Head-End-System verwaltet die Verbrauchsdaten und kommuniziert mit den Verbrauchszählern. Eine intelligente Messinfrastruktur kann dabei eine große Anzahl an Verbrauchszählern umfassen. Daher ist eine simultane direkte Kommunikationsverbindung von allen Verbrauchszählern zum Head-End-System oft nicht möglich, da nicht ausreichend Kommunikationsmittel zur Verfügung stehen bzw. die Übertragungsbandbreiten zu gering sind. Damit die von den Verbrauchszählern erfassten und versendeten Daten dennoch möglichst sicher und verlustfrei an das Head-End-System übertragen werden können, werden Datensammelvorrichtungen, sogenannte Datensammler, eingesetzt. Die Datensammler werden in der Kommunikationsstrecke zwischen den Verbrauchszählern und dem Head-End-System angeordnet. Dabei sammeln sie auf einem Kommunikationsweg die von den Verbrauchszählern versendeten Verbrauchsdaten und agieren als Zwischenspeicher bis die Verbrauchsdaten an das Head-End-System weitergeleitet werden. Ferner können die Datensammler zusätzliche Aufgaben übernehmen, wie beispielsweise Statusabfragen bei den Verbrauchszählern durchführen sowie diesen Informationen und Programmcodes, wie beispielsweise Firmware- und Software-Updates sowie Kommunikationszeitpläne, bereitzustellen. In dieser Messinfrastruktur können die Verbrauchszähler per Funk mit Hilfe eines Funkschlüssels konfiguriert werden.

Kommunikationswege zwischen Datensammlern und Verbrauchszählern werden regelmäßig auch als Primärkommunikation bezeichnet. Der Kommunikationsweg zwischen Datensammler und dem Head-End-System wird als Tertiärkommunikation bezeichnet. Die Primärkommunikation und die Tertiärkommunikation unterscheiden sich in ihren Charakteristiken. Für die Primärkommunikation kann beispielsweise MBus bzw. wireless-MBus zur Übertragung verwendet werden, welches eine niedrigere Bandbreite aufweist, als Mobilfunknetzwerke wie UMTS oder HSDPA, welche beispielsweise für die Tertiärkommunikation eingesetzt werden. Für die Tertiärkommunikation können zudem Ethernet, Wifi und/oder DSL Verbindungen genutzt werden. Bei einer bidirektionalen Primärkommunikation ist die Zugriffslatenz hoch und die Verfügbarkeit niedrig, da der Verbindungsaufbau bzw. der Zeitpunkt des Verbindungsaufbaus für gewöhnlich vom Verbrauchszähler ermöglicht bzw. vorgegeben wird. Die Verarbeitung im Verbrauchszähler ist aufgrund dessen Komponenten mit geringem Energieverbrauch (low power hardware) beschränkt. Man spricht deshalb auch von einem sogenannten "constrained device". Die Primärkommunikation per Funk kann zudem durch fremde Kommunikation auf freien Frequenzen gestört werden. Die Tertiärkommunikation weist hingegen eine niedrige Zugriffslatenz, aufgrund performanter Hard- und Software, sowie eine hohe Verfügbarkeit, durch eine stehende Verbindung zwischen Datensammler und Head-End-System, auf.

### Nächstliegender Stand der Technik

In der DE 2012 203 518 A1 wird ein Verfahren zur Kommunikation von energieverbrauchsspezifischen Messdatenelementen von einer Smart Meter Vorrichtung an ein Computersystem eines Energieversorgers und/oder Messstellenbetreibers beschrieben. Die Vorrichtung weist ein Sicherheitsmodul auf, welches als einzige Kommunikationsschnittstelle der Vorrichtung mit dem Computersystem dient. Die Vorrichtung weist die für ihren Betrieb notwendigen Konfigurationsdaten auf, wobei die Vorrichtung eine Angabe derjenigen Messdatenelemente und/oder Konfigurationsdaten zugeordnet ist, für welche das Computersystem für einen Lesezugriff berechtigt ist.

Die EP 2 579 227 A1 offenbart ein Verfahren sowie einen Datensammler, welcher ein Datenempfangsmodul zum Empfangen von Daten, ein Datenverarbeitungsmodul zum Verarbeiten der empfangenen Daten, ein Datensendemodul zum Senden der verarbeiteten Daten und einen Speicher zum Zwischenspeichern empfangener Daten aufweist. Allerdings ist der Speicher nur zur Erleichterung des Weiterversands von Daten vorgesehen. Es findet somit lediglich eine aktive Weiterleitung der Daten durch den Datensammler statt.

Die US 2012/0084554 A1 betrifft ein Überwachungssystem, bei dem verschlüsselte Daten in einem unverschlüsselten Bereich kenntlich gemacht werden.

Die DE 101 52 554 A1 offenbart, dass eine Primärfunkverbindung zwar unidirektional sein kann, aber eine bidirektionale Primärfunkverbindung vorteilhafter ist.

Anonymous: "Smart meter - Wikipedia", 5. April 2018 (2018-04-05), Seiten 1-28, XP093006403, Gefunden im Internet: URL:https://en.wikipedia.org/w/index.php? title=Smart meter&oldid=834464539. Dieses Dokument lehrt, dass ein Smart Meter eine bidirektionale Kommunikation ermöglicht.

### Aufgabe der vorliegenden Erfindung

Die Aufgabe der vorliegenden Erfindung besteht darin, ein neuartiges Verfahren sowie einen Datensammler zur Verfügung zu stellen, bei dem bei einer effizienten Nutzung der Netzwerkbandbreite eine erhöhte Betriebsflexibilität ermöglicht wird.

### Lösung der Aufgabe

Die vorstehende Aufgabe wird durch die gesamte Lehre des Anspruchs 1 sowie durch einen Datensammler gemäß Anspruch 8 gelöst. Zweckmäßige Ausgestaltungen der Erfindung sind in den Unteransprüchen beansprucht.

Erfindungsgemäß ist ein Verfahren zum Betrieb eines Verbrauchsdatenerfassungssystems vorgesehen, welches ein Head-End-System, mindestens einen, vorzugsweise eine Mehrzahl von Datensammler(n), sowie mindestens einen, vorzugsweise eine Mehrzahl von Verbrauchszähler(n) umfasst, wobei Verbrauchsdaten und/oder Sensordaten vom Verbrauchszähler über den Datensammler zum Head-End-System übertragen werden, wobei der Datensammler die vom Verbrauchszähler stammenden Verbrauchsdaten und/oder Sensordatenerfasst und für die Übertragung an das Head-End-System vorhält, wobei die vom Verbrauchszähler stammenden Verbrauchsdaten und/oder Sensordatenim Datensammler als Rohdaten mit hoher zeitlicher Granularität der Verbrauchsdaten und/oder Sensordaten abgespeichert werden. Im Normalbetrieb nimmt der Datensammler eine Datenreduktion auf die an das Head-End-System weitergeleiteten Verbrauchsdaten und/oder Sensordaten vor, indem Daten mit geringerer zeitlicher Granularität übertragen werden, so dass nur ein Teil der vom Verbrauchszähler stammenden im Datensammler abgespeicherten Verbrauchsdaten und/oder Sensordaten an das Head-End-System weitergeleitet werden. Im Bedarfsfall wird per Abruf durch das Head-End-System eine Übertragung von Verbrauchsdaten und/oder Sensordaten, die im Normalbetrieb nicht an das Head-End-System übertragen wurden, vom Datensammler zum Head-End-System vorgenommen, wobei der Datensammler eine entsprechende Antwort aus seinem Datenbestand erzeugt, wobei der Datenbestand Daten ohne durchgeführte Datenreduktion umfasst. Erfindungsgemäß kommunizieren der Datensammler und der mindestens eine, vorzugsweise die Mehrzahl von Verbrauchszähler(n) über ein primäres Kommunikationssystem und der Datensammler und das Head-End-System kommunizieren über ein tertiäres Kommunikationssystem, wobei das tertiäre Kommunikationssystem eine höhere Bandbreite als das primäre Kommunikationssystem aufweist.

Im Normalbetrieb senden die Verbrauchszähler Daten, wie z. B. Verbrauchsdaten bzw. Sensordaten, an den entsprechenden Datensammler mit hoher zeitlicher Granularität. Damit dem Datensammler Daten mit hoher Granularität bzw. Aktualität zur Verfügung gestellt werden können und somit nutzbar gemacht werden können, besteht vorteilhafterweise die Möglichkeit, dass der Verbrauchszähler über einen langen Zeitraum in kurzen Zeitabständen, beispielsweise in Stunden-, Minuten- oder Sekundenabständen, wie z. B. alle acht Sekunden, seine Daten sendet. Durch die kurzen Sendeintervalle kommt es zu einem großen Datenaufkommen durch die Verbrauchszähler. Im Normalbetrieb ist es ausreichend, einen Teil der von den Verbrauchszählern stammenden Daten an das Head-End-System weiter zu senden, um das Head-End-System zu entlasten. Die Daten aller Verbrauchszähler im Normalbetrieb an das Head-End-System weiterzuleiten, wäre mit einem immensen Aufwand in der Übertragung und der zentralen Datenhaltung verbunden. Der Datensammler kann die gesendeten Daten empfangen und diese verarbeiten. Für den Normalbetrieb des Head-End-Systems sind zweckmäßigerweise Daten mit geringerer Granularität und/oder Aktualität bzw. eine grober skalierte Datenbasis ausreichend. Erfindungsgemäß speichert der Datensammler die empfangenen Verbrauchsdaten und/oder Sensordaten als Rohdaten, d. h. ohne die Anwendung eines Filters, einer Datenreduktion oder ähnlichem, ab. Somit besteht die Möglichkeit für jeden Verbrauchszähler eine Mehrzahl an empfangenen Daten, beispielsweise in Form von Datenpaketen und/oder Telegrammen, im Datensammler entsprechend abzulegen und zu speichern. Hierfür können zweckmäßigerweise die empfangenen Daten im Datensammler interpretiert werden, um sie beispielsweise ihrem Inhalt entsprechend zu klassifizieren und abzulegen bzw. zu speichern. Zweckmäßigerweise kann die Persistenz, also das Bereithalten von Daten über einen langen Zeitraum, durch den Datensammler erfolgen.

Erfindungsgemäß erfolgt die Übertragung der Daten, die vorher nicht an das Head-End-System übertragen wurden, per Abruf durch das Head-End-System. Sofern im Head-End-System ein Bedarfsfall eintritt, bei dem die im Normalbetrieb gesendeten Daten nicht ausreichend sind, kann auf die im Datensammler abgespeicherten Daten zugegriffen werden. Bei einem Bedarfsfall kann es sich um ein sogenanntes On-Demand-Reading (ODR) des Head-End-Systems handeln. Somit wird dem Head-End-System durch das Verfahren eine Möglichkeit geschaffen, im Bedarfsfall Daten, welche im Normalbetrieb nicht zur Verfügung stehen würden, schnell und sicher abzufragen. Eine Möglichkeit der Anwendung des Verfahrens besteht beispielsweise im Bereich von Smart Cities, Smart Grids (intelligente Netze) und/oder loT (Internet of Things).

Zweckmäßigerweise können die Daten einer Mehrzahl von Verbrauchszählern in einem zugehörigen Datensammler abgespeichert werden. Sofern durch das Head-End-System ein Abruf von Daten erfolgt, welche von einem bestimmten Verbrauchszähler stammen, ist somit bekannt in welchem zugehörigen Datensammler die abzurufenden Daten gespeichert sind. Das Head-End-System kann beispielsweise die Datenabfrage an den entsprechenden Datensammler senden.

Bei einer Abfrage im Bedarfsfall durch das Head-End-System erzeugt der Datensammler eine entsprechende Antwort aus seinem Datenbestand. Der Datenbestand des Datensammlers umfasst nicht gefilterte Daten der Verbrauchszähler bzw. Daten, an denen keine Datenreduktion durchgeführt worden ist. Der Datensammler nimmt erfindungsgemäß eine Datenreduktion auf den im Normalbetrieb an das Head-End-System weitergeleiteten Teil der Daten vor. Daten, welche im Normalbetrieb nicht über tertiäre Kommunikationswege an das Head-End-System weitergeleitet werden, liefert der Datensammler im Bedarfsfall an das Head-End-System nach. Da für die Nachlieferung der Daten im Bedarfsfall tertiäre Kommunikationswege verwendet werden können, kann damit eine Kommunikationsstrecke mit hoher Bandbreite genutzt werden. Eine Beantwortung einer Anfrage im Bedarfsfall durch das Head-End-System kann somit schnell und sicher erfolgen.

Zweckmäßigerweise besteht die Möglichkeit, dass der Datensammler für die Erzeugung der Antwort nicht mit einem Verbrauchszähler kommuniziert. Auf eine Anfrage im Bedarfsfall durch das Head-End-System generiert der Datensammler seine Antwort mittels des Datenbestandes. Es besteht erfindungsgemäß nicht die Notwendigkeit, dass der Datensammler Daten von einem und/oder mehreren Verbrauchszählern abruft. Bei einer Abfrage im Bedarfsfall kann das Senden der Anfrage und anschließende Empfangen der Antwort über die Primärstrecke vermieden werden. Vorteilhafterweise kann damit die Latenz bzw. die Wartezeit für einen Verbindungsaufbau zwischen Datensammler und Verbrauchszähler umgangen werden.

Besonders vorteilhaft ist, dass der Zugriff im Bedarfsfall ohne eine Abfrage mit Durchgriff bis zum Verbrauchszähler erfolgen kann. Das Head-End-System stellt die Datenanfrage im Bedarfsfall an den Datensammler über eine schnelle Tertiärkommunikation. Ein Durchgriff auf den entsprechenden Verbrauchszähler bzw. eine Anfrage des Datensammlers an den Verbrauchszähler kann ausbleiben. Damit ist es zweckmäßigerweise nicht notwendig bei einer Datenabfrage im Bedarfsfall eine potentiell langsame Primärkommunikation zwischen Datensammler und Verbrauchszähler zu verwenden. Zudem kann die Antwort vom Datensammler an das Head-End-System schnell erfolgen, da beispielsweise nicht auf einen Verbindungsaufbau zwischen Datensammler und entsprechenden Verbrauchszähler gewartet werden muss. Ferner kann unabhängig von einer gestörten Primärkommunikation die Datenabfrage des Head-End-Systems im Bedarfsfall schnell und sicher durch den Datensammler beantwortet werden. Erfindungsgemäß erfolgt die Übertragung der Daten durch einen unidirektionalen Kommunikationsweg von einem Verbrauchszähler an einen Datensammler. Die Aufgabe des Verbrauchszählers kann somit beispielsweise auf das Liefern von Daten bzw. Messwerten, vorzugsweise in guter Auflösung bzw. hoher Granularität, beschränkt werden. Bei einem Verbrauchszähler kann es sich aufgrund der autarken Energieversorgung und der beschränkten Rechenleistung um ein sogenanntes "constrained device", ein Gerät mit eingeschränkten Betriebsmitteln, handeln. So kann auf einer Kommunikationsstrecke mit äquivalenter Sende- und Empfangsreichweite der Empfang einen höheren Energiebedarf aufweisen als das Senden. Somit besteht vorteilhafterweise die Möglichkeit, durch einen unidirektionalen Sendeweg vom Verbrauchszähler zum Datensammler, Energie im Verbrauchszähler einzusparen.

Somit kann in einem Verbrauchsdatenerfassungssystem bei Abfragen im Bedarfsfall die schnellere Tertiärkommunikation zwischen Datensammler und Head-End-System bidirektional genutzt werden. Bei der langsameren Primärkommunikation zwischen Verbrauchszähler und Datensammler wird diese lediglich unidirektional genutzt.

Somit kann beispielsweise auf ein Empfangsmodul bzw. eine Empfangsverarbeitung im Verbrauchszähler verzichtet werden und dieser dadurch weniger störanfällig und kostengünstiger realisiert werden.

Unidirektionale Protokolle führen ferner aufgrund der Einfachheit gegenüber bidirektionalen Kommunikationsprotokollen zu einer geringeren Komplexität im Datensammler. Verbrauchzähler unterschiedlicher Hersteller können zudem unterschiedliche Kommunikationsprotokolle aufweisen, welche proprietär bzw. teilweise proprietär sein können. Somit kann durch die Verwendung unidirektionaler Kommunikationsprotokolle beispielsweise die Einbindung einer Vielzahl unterschiedlicher Verbrauchszähler-Modelle vereinfacht werden. Ferner kann das Verfahren ergänzend in einem System mit einer bidirektionalen Primärstrecke eingesetzt werden.

Erfindungsgemäß sendet der Verbrauchszähler die Daten in festen Zeitintervallen an den Datensammler. So kann der Verbrauchszähler beispielsweise über einen langen Zeitraum in kurzen Zeitabständen, z. B. in Intervallen von acht Sekunden, über den Primärkommunikationsweg Daten an den Datensammler senden. Es besteht die Möglichkeit für die Zeitintervalle Zeitabstände im Bereich von Sekunden, Minuten oder Stunden zu verwenden. Die Zeitintervalle zum Senden der Daten können dabei unabhängig von den Zeitpunkten der Erhebung der Messwerte am Verbrauchszähler sein. Die Zeitintervalle zum Senden der Daten können von der Änderung der Messwerte unabhängig sein, so dass beispielsweise bei einem sich nicht verändernden Zählerstand dieser weiterhin in einem festen Zeitintervall an den Datensammler gesendet wird.

Indem die Daten ihrem Inhalt entsprechend im Datensammler klassifiziert und abgelegt werden, können diese schneller dem Head-End-System im Bedarfsfall zur Verfügung gestellt werden. Um die Daten zu klassifizieren, können diese beispielsweise durch den Datensammler interpretiert werden. Die im Datensammler abgelegten Daten können die an das Head-End-System im Normalbetrieb weiter gesendeten Daten umfassen. Ferner können die Daten noch als Rohdaten, also vor einer Datenreduktion, abgelegt werden, wodurch die Möglichkeit besteht, dass die Daten zweckmäßigerweise in einer nicht gefilterten bzw. reduzierten Form vorliegen.

Vorteilhafterweise kann der Inhalt bei verschlüsselten Daten in einem unverschlüsselten Bereich kenntlich gemacht werden. Wenn Daten in einer Nachricht verschlüsselt übertragen werden, kann der Inhalt der verschlüsselten Daten in einem unverschlüsselten Bereich der Nachricht kenntlich gemacht werden. Somit ist eine Handhabe und entsprechende Verarbeitung der Nachrichten bzw. der Daten, insbesondere der verschlüsselten Daten, im Datensammler auf einfache Weise ermöglicht, ohne Notwendigkeit, die Daten selbst im Datensammler zu entschlüsseln.

Nebengeordnet beansprucht die vorliegende Erfindung ein System umfassend mindestens einen, vorzugsweise eine Mehrzahl von Verbrauchszähler(n) sowie einen Datensammler. Der Datensammler und der mindestens eine Verbrauchszähler sind eingerichtet, gemäß mindestens einem der Verfahrensansprüche betrieben zu werden. So umfasst der Datensammler ein Datenempfangsmodul zum Empfangen von Verbrauchsdaten und/oder Sensordaten von einem Verbrauchszähler, ein Datenverarbeitungsmodul zum Verarbeiten der empfangenen Verbrauchsdaten und/oder Sensordaten, ein Datensendemodul zum Senden der verarbeiteten Verbrauchsdaten und/oder Sensordaten, insbesondere an ein Head-End-System, und einen Speicher zum Vorhalten der an das Head-End-System zu übertragenden Verbrauchsdaten und/oder Sensordaten, wobei die vom Verbrauchszähler stammenden Verbrauchsdaten und/oder Sensordaten im Datensammler als Rohdaten mit hoher zeitlicher Granularität der Verbrauchsdaten und/oder Sensordaten abspeicherbar sind. Es ist ein Normalbetrieb vorgesehen, in dem der Datensammler eine Datenreduktion auf die an das Head-End-System weitergeleiteten Verbrauchsdaten und/oder Sensordaten vornimmt, indem Daten mit geringerer zeitlicher Granularität übertragen werden, so dass nur ein Teil der vom Verbrauchszähler stammenden im Datensammler abgespeicherten Verbrauchsdaten und/oder Sensordaten an das Head-End-System weitergeleitet werden. Es ist ferner im Bedarfsfall ein Abruf durch das Head-End-System vorgesehen, indem eine Übertragung von Verbrauchsdaten und/oder Sensordaten, die im Normalbetrieb nicht an das Head-End-System übertragen wurden, vom Datensammler zum Head-End-System vorgenommen wird, wobei der Datensammler eine entsprechende Antwort aus seinem Datenbestand erzeugt, wobei der Datenbestand Daten ohne durchgeführte Datenreduktion umfasst.

Vorteilhafterweise kann der Speicher des Datensammlers ein nichtflüchtiges Speichermedium umfassen. Die Anforderung an Persistenz der Daten kann somit von den Verbrauchzählern weg und hin zum Datensammler verlagert werden. Als nichtflüchtiges Speichermedium können beispielsweise auch ein Dateisystem und/oder eine Datenbank betrachtet werden.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: einen vereinfachten schematischen hierarchischen Aufbau eines Verbrauchsdatenerfassungssystems;
- Fig. 2: einen vereinfachten schematischen Datenfluss vom Verbrauchszähler über den Datensammler zum Head-End-System;
- Fig. 3: eine vereinfachte schematische Ausgestaltung des Datensammlers als Blockschaltbild;
- Fig. 4: eine beispielhafte vereinfachte schematische Sende- und Empfangssequenz zwischen Head-End-System, Datensammler und Verbrauchszähler.

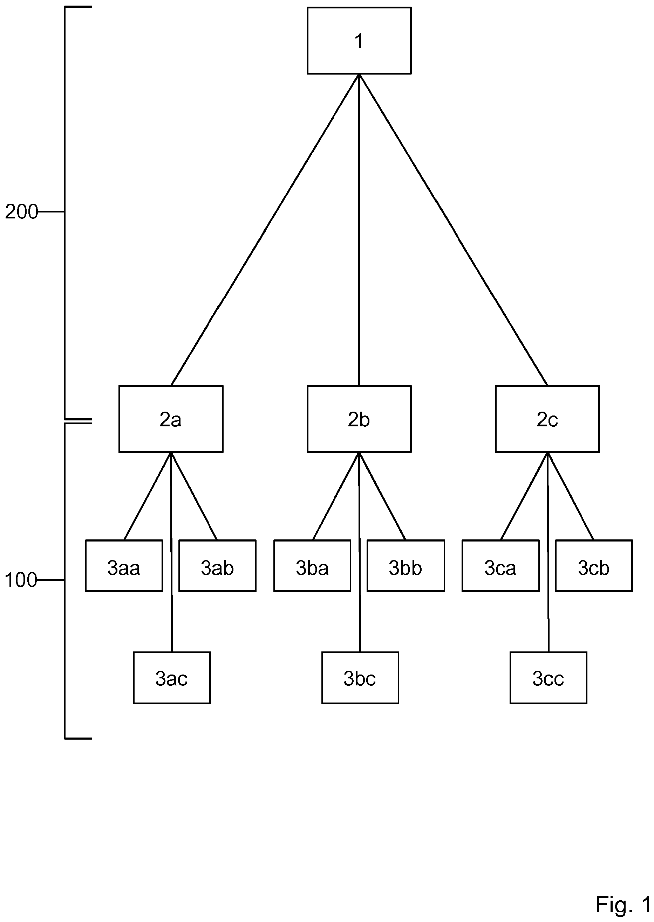

Fig. 1 zeigt einen vereinfachten schematischen hierarchischen Aufbau eines Verbrauchsdatenerfassungssystems per Funk mit einem primären Kommunikationssystem 100 sowie einem tertiären Kommunikationssystem 200. Das tertiäre Kommunikationssystem 200 umfasst ein Head-End-System 1 sowie mehrere, z. B. drei, Datensammler 2a - 2c. Das primäre Kommunikationssystem 100 umfasst die vorgenannten Datensammler 2a - 2c sowie mehrere Verbrauchszähler 3aa - 3cc, wobei für jeden Datensammler 2a - 2c exemplarisch drei untergeordnete Verbrauchszähler 3aa - 3cc dargestellt sind. Die Verbrauchszähler 3aa - 3cc stehen nicht direkt mit dem tertiären Kommunikationssystem 200 in Verbindung, sondern indirekt über den entsprechenden Datensammler 2a - 2c.

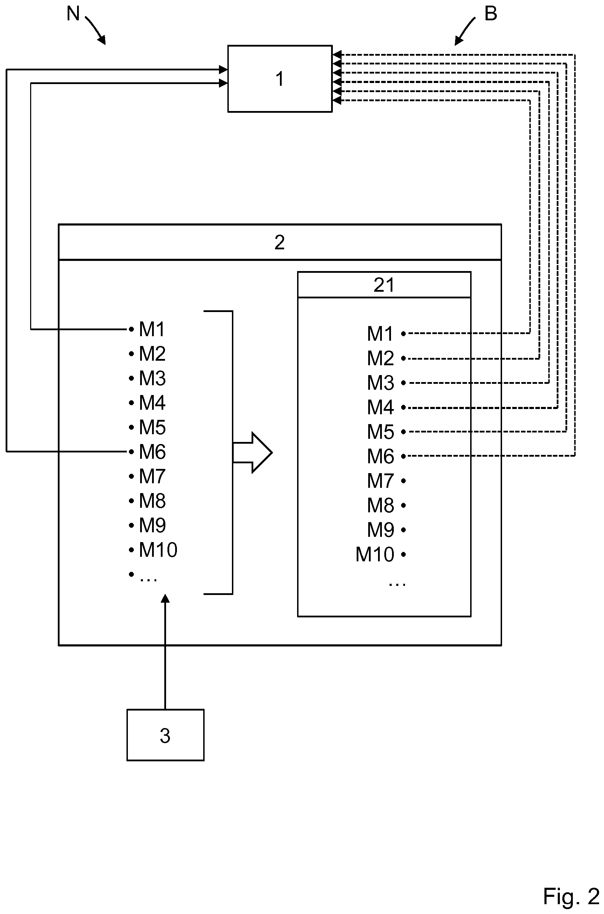

In Fig. 2 ist der vereinfachte schematische Datenfluss vom Verbrauchszähler 3 über den Datensammler 2 zum Head-End-System 1 dargestellt. Der Verbrauchszähler 3 sendet die Daten an den Datensammler 2. Im Datensammler 2 gehen beispielsweise die Daten-Nachrichten M1 - M10 ein. Im Normalbetrieb N werden die Daten-Nachrichten M1 - M10 vom Datensammler 2 gefiltert bzw. reduziert und gegebenenfalls nicht alle Daten-Nachrichten M1 - M10 weitergeleitet. In Fig. 2 werden beispielsweise nur die Daten-Nachrichten M1 und M6 im Normalbetrieb N an das übergeordnete Head-End-System 1 gesendet. Im Datensammler 2 werden die vom Verbrauchszähler 3 empfangenen Daten-Nachrichten M1 - M10 ihrem Inhalt entsprechend klassifiziert und im Speicher 21 abgelegt. Im Bedarfsfall B hat das Head-End-System 1 Zugriff auf ungefilterte bzw. unreduzierte Daten im Speicher 21 und kann diese Daten abrufen. Beispielsweise werden im Bedarfsfall B die Daten-Nachrichten M1 - M6 an das Head-End-System 1 gesendet. Somit hat das Head-End-System 1 zusätzlich Zugriff auf die Daten-Nachrichten M2 - M5, welche im Normalbetrieb N nicht übermittelt werden.

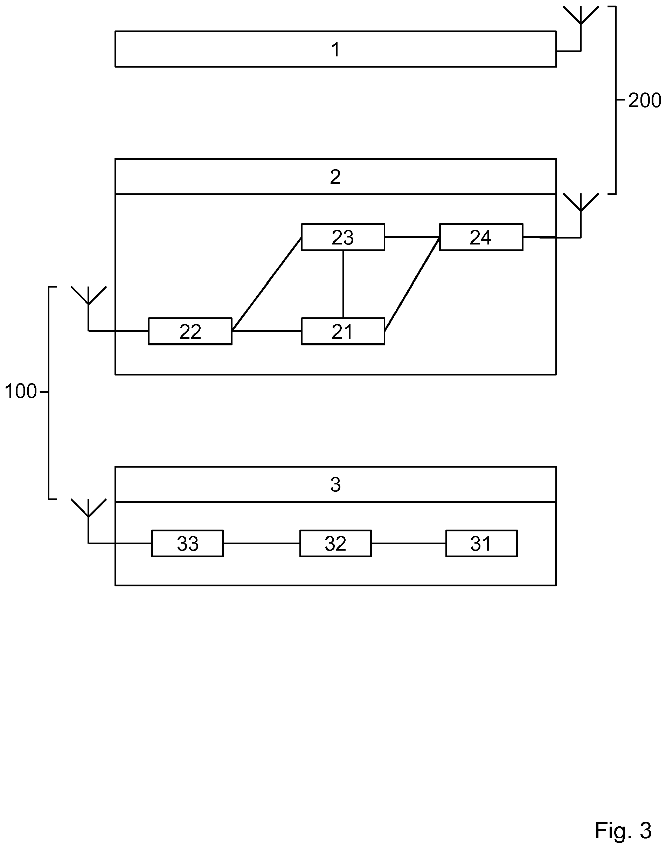

Fig. 3 zeigt eine vereinfachte schematische Ausgestaltung des Datensammlers 2 als Blockschaltbild sowie einen Verbrauchszähler 3. Der Verbrauchszähler 3 weist eine Messeinheit für Verbrauchsdaten 31, eine Logikeinheit 32 sowie eine Kommunikationseinheit 33 auf. Die Kommunikationseinheit 33 ist an eine Antenne gekoppelt, welche über das primäre Kommunikationssystem 100 kommuniziert. Der Datensammler 2 weist eine erste Antenne auf, welche für Kommunikation über das primäre Kommunikationssystem 100 hergerichtet ist. Die erste Antenne ist mit einem Datenempfangsmodul 22 verbunden, welches eingehende Daten empfängt, insbesondere Verbrauchsdaten von Verbrauchszählern 3. Das Datenempfangsmodul 22 leitet die empfangenen Daten an einen Speicher 21, zum Speichern der Daten, sowie an ein Datenverarbeitungsmodul 23 weiter. Im Datenverarbeitungsmodul 23 werden die Daten interpretiert, klassifiziert und ihrem Inhalt nach im Speicher 21 abgelegt. Die Daten werden zudem gefiltert bzw. reduziert und für die Weitersendung an das Head-End-System 1 hergerichtet. Im Normalbetrieb werden die gefilterten bzw. reduzierten Daten an ein Datensendemodul 24 weitergeleitet, welches die gefilterten bzw. reduzierten Daten mittels einer zweiten Antenne über das tertiäre Kommunikationssystem 200 versendet. Das Head-End-System 1 empfängt im Normalbetrieb die gesendeten gefilterten bzw. reduzierten Daten. Im Bedarfsfall sendet das Head-End-System 1 eine Anfrage über das tertiäre Kommunikationssystem 200 an den Datensammler 2. Der Datensammler 2 bedient die Anfrage mittels der im Speicher 21 abgelegten Daten. Die abgelegten Daten umfassen nicht gefilterte bzw. nicht reduzierte Daten. Bei einem Abruf im Bedarfsfall durch das Head-End-System 1 findet somit keine Kommunikation mit dem Verbrauchszähler 3 statt.

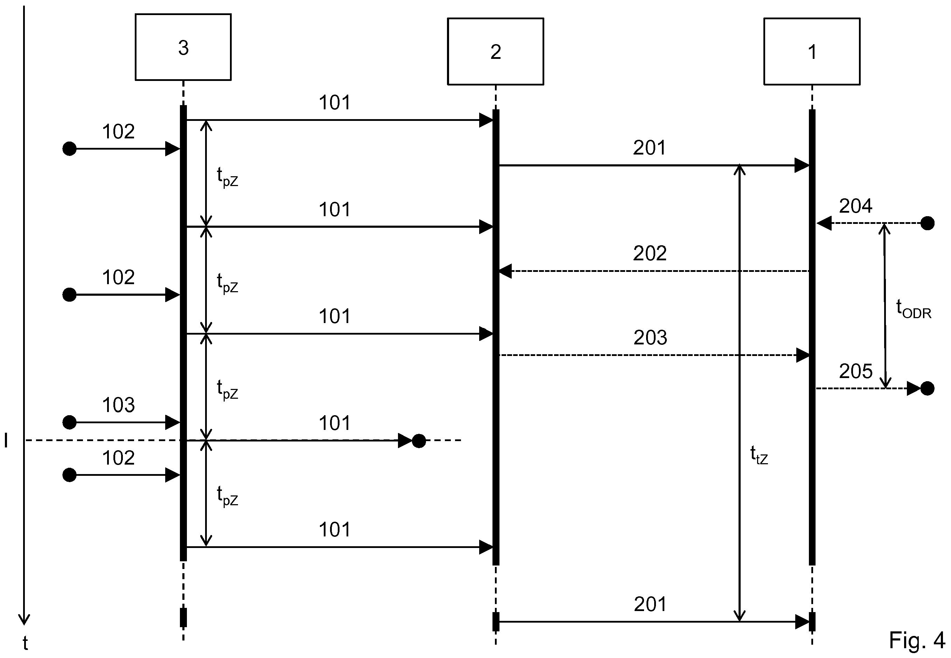

In Fig. 4 sind die prinzipiellen Sende- und Empfangssequenzen zwischen Head-End-System 1, Datensammler 2 und Verbrauchszähler 3 in einem zeitlichen Verlauf dargestellt. Der Verbrauchzähler erhält Verbrauchszähler-Sensor-Daten 102, welche die aktuellen Verbrauchszahlen umfassen. Neben den Verbrauchzähler-Sensor-Daten 102 können weitere Verbrauchszähler-Ereignisse 103 registriert werden. Die Verbrauchszähler-Daten 101 können solche Verbrauchszähler-Ereignisse 103 umfassen. Der Verbrauchszähler 3 sendet primäre Verbrauchszähler-Daten 101 in festen Zeitintervallen t_{pZ} (primärer Zyklus) an den Datensammler 2. Die Zeitintervalle t_{pZ} können beispielsweise im Bereich von wenigen Sekunden, z. B. 10 Sekunden, und mehreren Minuten, z. B. 15 Minuten, liegen. Die primären Verbrauchszähler-Daten 101 werden über einen unidirektionalen primären Kommunikationsweg an den Datensammler 2 gesendet. Eine unidirektionale Kommunikation mit einem hohen Zyklus ist zweckmäßigerweise weniger störanfällig realisierbar, als eine bidirektionale Kommunikation. Die Intervalle zwischen den Updates der Verbrauchzähler-Sensor-Daten 102 müssen nicht mit den Zeitintervallen t_{pZ} übereinstimmen. Ferner ist es nicht notwendig, dass die Updates der Verbrauchszähler-Sensor-Daten 102 in festen Zeitintervallen erfolgen. Es kann auch der Fall, wie zum Zeitpunkt I, eintreten, dass die Verbrauchszähler-Daten 101 den Datensammler 2 nicht erreichen bzw. nicht von diesem empfangen werden können, beispielsweise aufgrund einer Störung während der Übertragung der Verbrauchszähler-Daten 101. Das Zeitintervall t_{pZ} bis zur nächsten Aussendung von Verbrauchszähler-Daten 101 wird durch die Störung nicht beeinflusst. Im Datensammler 2 werden die empfangenen Verbrauchszähler-Daten 101 interpretiert, klassifiziert und im Speicher 21 abgelegt. Im Normalbetrieb wird zum Weitersenden an das Head-End-System 1 eine Datenreduktion an den Verbrauchzähler-Daten 101 vorgenommen. Diese Datenreduktion betrifft nicht die im Speicher 21 des Datensammlers 2 abgelegten Daten. Die gefilterten bzw. reduzierten Verbrauchszähler-Daten 101 werden im Normalbetrieb vom Datensammler 2 an das Head-End-System 1 als tertiäre Nachricht 201 gesendet. Die tertiären Nachrichten 201 werden im regelmäßigen Zeitintervall t_{tZ} (tertiärer Zyklus) versendet. Die Zeitintervalle t_{tZ} und t_{pZ} sind nicht notwendigerweise identisch.

Sofern eine bedarfsmäßige Auslesung durch den Benutzer mittels einer Nutzeranfrage 204 am Head-End-System 1 erfolgt, greift das Head-End-System 1 auf den Datensammler 2 zu. Dieser Zugriff im Bedarfsfall geschieht durch eine tertiäre Anfrage 202. Der Datensammler 2 erzeugt seine Antwort unmittelbar aus dem eigenen Datenbestand im Speicher 21. Eine Kommunikation mit dem Verbrauchszähler 3 findet hierfür nicht statt und ist zudem nicht notwendig, da die im Speicher 21 des Datensammlers 2 vorliegenden Daten ausreichend aktuell und granular sind. Somit ist für eine Abfrage im Bedarfsfall keine bidirektionale Kommunikation zwischen Datensammler 2 und Verbrauchszähler 3 notwendig. Die erzeugte Antwort wird vom Datensammler 2 als tertiäre Antwort 203 an das Head-End-System 1 gesendet. Die tertiäre Anfrage 202 und die tertiäre Antwort 203 finden außerhalb der regelmäßigen Zeitintervalle t_{tZ} der tertiären Nachrichten 201 statt. Die tertiäre Antwort 203 empfängt das Head-End-System 1 und gibt diese als Nutzerantwort 205 an den Benutzer aus. Die Zeit t_{ODR} zwischen Nutzeranfrage 204 und Nutzerantwort 205 ist im vorliegenden System mit einem Speicher 21 im Datensammler kürzer, als in vergleichbaren Systemen, in welchen bidirektionale Verbindungen zwischen Datensammler 2 und Verbrauchszähler 3 für Nutzeranfragen 204 aufgebaut werden müssten.

### BEZUGSZEICHENLISTE

- 1: Head-End-System
- 2: Datensammler
- 3: Verbrauchszähler

- 21: Speicher
- 22: Datenempfangsmodul (Datensammler)
- 23: Datenverarbeitungsmodul (Datensammler)
- 24: Datensendemodul (Datensammler)

- 31: Messeinheit für Verbrauchsdaten (Verbrauchszähler)
- 32: Logikeinheit (Verbrauchszähler)
- 33: Kommunikationseinheit (Verbrauchszähler)

- 100: primäres Kommunikationssystem
- 101: primäre Verbrauchszähler-Daten
- 102: Verbrauchszähler-Sensor-Daten
- 103: Verbrauchszähler-Ereignis

- 200: tertiäres Kommunikationssystem
- 201: tertiäre Nachricht (Normalbetrieb)
- 202: tertiäre Anfrage (Bedarfsfall)
- 203: tertiäre Antwort (Bedarfsfall)
- 204: Nutzeranfrage
- 205: Nutzerantwort

- M1 - M10: Daten-Nachrichten

- N: Normalbetrieb
- B: Bedarfsfall

## Patentansprüche

1. Verfahren zum Betrieb eines Verbrauchsdatenerfassungssystems, welches
ein Head-End-System (1),
mindestens einen, vorzugsweise eine Mehrzahl von Datensammler(n) (2), sowie
mindestens einen, vorzugsweise eine Mehrzahl von Verbrauchszähler(n) (3) umfasst,
wobei Verbrauchsdaten und/oder Sensordaten vom Verbrauchszähler (3) über den Datensammler (2) zum Head-End-System (1) übertragen werden,
wobei der Verbrauchszähler (3) die Verbrauchsdaten und/oder Sensordaten an den Datensammler (2) auf Basis eines unidirektionalen Kommunikationsprotokolls in festen Zeitintervallen sendet,
wobei der Datensammler (2) die vom Verbrauchszähler (3) stammenden Verbrauchsdaten und/oder Sensordaten erfasst und für die Übertragung an das Head-End-System (1) vorhält, wobei
die vom Verbrauchszähler (3) stammenden Verbrauchsdaten und/oder Sensordaten im Datensammler (2) abgespeichert werden,
die Verbrauchsdaten und/oder Sensordaten im Datensammler (2) als Rohdaten mit einer ersten zeitlichen Granularität der Verbrauchsdaten und/oder Sensordaten abgespeichert werden, wobei
im Normalbetrieb (N) der Datensammler (2) eine Datenreduktion auf die an das Head-End-System (1) weitergeleiteten Verbrauchsdaten und/oder Sensordaten vornimmt, indem Daten mit einer zweiten zeitlichen Granularität übertragen werden, so dass nur ein Teil der vom Verbrauchszähler (3) stammenden im Datensammler (2) abgespeicherten Verbrauchsdaten und/oder Sensordaten an das Head-End-System (1) weitergeleitet wird, und
wobei die erste zeitliche Granularität höher als die zweite zeitliche Granularität ist,
wobei
im Bedarfsfall (B) per Abruf durch das Head-End-System (1) eine Übertragung von Verbrauchsdaten und/oder Sensordaten, die im Normalbetrieb (N) nicht an das Head-End-System (1) übertragen wurden, vom Datensammler (2) zum Head-End-System (1) vorgenommen wird, wobei der Datensammler (2) eine entsprechende Antwort aus seinem Datenbestand erzeugt, wobei der Datenbestand Daten ohne durchgeführte Datenreduktion umfasst,
wobei der Datensammler (2) und der mindestens eine, vorzugsweise die Mehrzahl von Verbrauchszähler(n) (3) über ein primäres Kommunikationssystem (100) kommunizieren, und
der Datensammler (2) und das Head-End-System (1) über ein tertiäres Kommunikationssystem (200) kommunizieren,
wobei das tertiäre Kommunikationssystem (200) eine höhere Bandbreite als das primäre Kommunikationssystem (100) aufweist.

2. Verfahren nach Anspruch 1, **dadurch gekennzeichnet, dass** die Daten einer Mehrzahl von Verbrauchszählern (3) in einem zugehörigen Datensammler (2) abgespeichert werden.

3. Verfahren nach Anspruch 1 oder 2, **dadurch gekennzeichnet, dass** der Datensammler (2) für die Erzeugung der Antwort nicht mit einem Verbrauchszähler (3) kommuniziert.

4. Verfahren nach einem der vorhergehenden Ansprüche, **dadurch gekennzeichnet, dass** die Übertragung der Daten durch einen unidirektionalen Kommunikationsweg von einem Verbrauchszähler (3) an einen Datensammler (2) erfolgt.

5. Verfahren nach einem der vorhergehenden Ansprüche, **dadurch gekennzeichnet, dass** der Verbrauchszähler (3) die Daten in festen Zeitintervallen an den Datensammler (2) sendet.

6. Verfahren nach einem der vorhergehenden Ansprüche, **dadurch gekennzeichnet, dass** die Daten ihrem Inhalt entsprechend im Datensammler (2) klassifiziert und abgelegt werden.

7. Verfahren nach Anspruch 6, **dadurch gekennzeichnet, dass** der Inhalt bei verschlüsselten Daten in einem unverschlüsselten Bereich kenntlich gemacht wird.

8. System umfassend mindestens einen, vorzugsweise eine Mehrzahl von Verbrauchszähler(n) (3) sowie einen Datensammler (2), wobei der Datensammler Folgendes umfasst:
ein Datenempfangsmodul (22) zum Empfangen von Verbrauchsdaten und/oder Sensordaten von dem mindestens einen Verbrauchszähler (3), vorzugsweise der Mehrzahl der Verbrauchszähler (3),
ein Datenverarbeitungsmodul (23) zum Verarbeiten der empfangenen Verbrauchsdaten und/oder Sensordaten,
ein Datensendemodul (24) zum Senden der verarbeiteten Verbrauchsdaten und/oder Sensordaten an ein Head-End-System (1), und
einen Speicher (21) zum Vorhalten der an das Head-End-System (1) zu übertragenden Verbrauchsdaten und/oder Sensordaten,
**dadurch gekennzeichnet, dass**
der Datensammler (2) und der mindestens eine Verbrauchszähler (3) eingerichtet sind, gemäß dem Verfahren nach einem der vorhergehenden Ansprüche betrieben zu werden.

9. Datensammler (2) nach Anspruch 8, **dadurch gekennzeichnet, dass** der Speicher (21) ein nichtflüchtiges Speichermedium umfasst.

## Claims

1. Method for operating a consumption data acquisition system, which comprises
a head-end system (1),
at least one, preferably a plurality of, data collector(s) (2),
at least one, preferably a plurality of, consumption meter(s) (3),
wherein consumption data and/or sensor data are transmitted from the consumption meter (3) to the head-end system (1) via the data collector (2),
wherein the consumption meter (3) sends the consumption data and/or sensor data to the data collector (2) in fixed time intervals on the basis of a unidirectional communication protocol,
wherein the data collector (2) acquires the consumption data and/or sensor data originating from the consumption meter (3) and retains them for transmission to the head-end system (1), wherein
the consumption data and/or sensor data originating from the consumption meter (3) are stored in the data collector (2),
the consumption data and/or sensor data are stored in the data collector (2) in the form of raw data with a first temporal granularity of the consumption data and/or sensor data, wherein,
during normal operation (N), the data collector (2) carries out a data reduction on the consumption data and/or sensor data forwarded to the head-end system (1) by transmitting data with a second temporal granularity, such that only a portion of the consumption data and/or sensor data originating from the consumption meter (3) and stored in the data collector (2) is forwarded to the head-end system (1), and
wherein the first temporal granularity is higher than the second temporal granularity,
wherein, if necessary (B), consumption data and/or sensor data that are not transmitted to the head-end system (1) during normal operation (N) are transmitted from the data collector (2) to the head-end system (1) upon request from the head-end system (1), wherein the data collector (2) generates an appropriate response from its data pool, wherein the data pool comprises data without performed data reduction,
wherein the data collector (2) and the at least one, preferably the plurality of, consumption meter(s) (3) communicate via a primary communication system (100), and
the data collector (2) and the head-end system (1) communicate via a tertiary communication system (200),
wherein the tertiary communication system (200) has a higher bandwidth than the primary communication system (100) .

2. Method according to Claim 1, **characterized in that** the data from a plurality of consumption meters (3) are stored in an associated data collector (2).

3. Method according to Claim 1 or 2, **characterized in that** the data collector (2) does not communicate with a consumption meter (3) in order to generate a response.

4. Method according to one of the preceding claims, **characterized in that** the data are transmitted from a consumption meter (3) to a data collector (2) on a unidirectional communication path.

5. Method according to one of the preceding claims, **characterized in that** the consumption meter (3) sends the data to the data collector (2) in fixed time intervals.

6. Method according to one of the preceding claims, **characterized in that** the data are classified and stored in the data collector (2) according to their content.

7. Method according to Claim 6, **characterized in that** the content, in the case of encrypted data, is indicated in an unencrypted region.

8. System comprising at least one, preferably a plurality of, consumption meter(s) (3) and a data collector (2), wherein the data collector comprises the following:
a data reception module (22) for receiving consumption data and/or sensor data from the at least one consumption meter (3), preferably the plurality of consumption meters (3),
a data processing module (23) for processing the received consumption data and/or sensor data,
a data sending module (24) for sending the processed consumption data and/or sensor data to a head-end system (1), and
a memory (21) for retaining the consumption data and/or sensor data to be transmitted to the head-end system (1),
**characterized in that**
the data collector (2) and the at least one consumption meter (3) are configured to be operated in accordance with the method according to one of the preceding claims.

9. Data collector (2) according to Claim 8, **characterized in that** the memory (21) comprises a nonvolatile memory medium.

## Revendications

1. Procédé de fonctionnement d'un système d'acquisition de données de consommation qui comprend
un système de tête de réseau (1),
au moins un collecteur de données, de préférence une pluralité de collecteurs de données (2), ainsi que
au moins un compteur de consommation, de préférence une pluralité de compteurs de consommation (3),
des données de consommation et/ou des données de capteur étant transmises du compteur de consommation (3) par le biais du collecteur de données (2) au système de tête de réseau (1),
le compteur de consommation (3) envoyant les données de consommation et/ou les données de capteur au collecteur de données (2) sur la base d'un protocole de communication unidirectionnel à intervalles de temps fixes,
le collecteur de données (2) acquérant les données de consommation et/ou les données de capteur provenant du compteur de consommation (3) et les maintenant disponibles en vue de la transmission au système de tête de réseau (1),
les données de consommation et/ou les données de capteurs provenant du compteur de consommation (3) étant mémorisées dans le collecteur de données (2),
les données de consommation et/ou les données de capteur étant mémorisées dans le collecteur de données (2) sous la forme de données brutes avec une première granularité temporelle des données de consommation et/ou des données de capteur,
en fonctionnement normal (N), le collecteur de données (2) effectuant une réduction des données sur les données de consommation et/ou les données de capteur transmises au système de tête de réseau (1) par transmission des données avec une deuxième granularité temporelle de sorte qu'une partie seulement des données de consommation et/ou des données de capteur provenant du compteur de consommation (3) et mémorisées dans le collecteur de données (2) ne soit transmise au système de tête de réseau (1), et
la première granularité temporelle étant supérieure à la deuxième granularité temporelle,
si nécessaire (B) sur demande du système de tête de réseau (1), une transmission des données de consommation et/ou de données des capteurs qui n'ont pas été transmises au système de tête de réseau (1) en fonctionnement normal (N) étant effectuée depuis le collecteur de données (2) au système de tête de réseau (1), le collecteur de données (2) générant une réponse correspondante à partir de sa base de données, la base de données comprenant des données sans qu'aucune réduction de données n'ait été effectuée,
le collecteur de données (2) et l'au moins un compteur de consommation, de préférence la pluralité de compteur de consommation (3), communiquant par le biais d'un système de communication primaire (100), et
le collecteur de données (2) et le système de tête de réseau (1) communiquant par le biais d'un système de communication tertiaire (200),
le système de communication tertiaire (200) ayant une bande passante plus élevée que le système de communication primaire (100).

2. Procédé selon la revendication 1, **caractérisé en ce que** les données d'une pluralité de compteurs de consommation (3) sont mémorisées dans un collecteur de données associé (2).

3. Procédé selon la revendication 1 ou 2, **caractérisé en ce que** le collecteur de données (2) ne communique pas avec un compteur de consommation (3) pour la génération de la réponse.

4. Procédé selon l'une des revendications précédentes, **caractérisé en ce que** la transmission des données est effectuée par un chemin de communication unidirectionnel allant d'un compteur de consommation (3) à un collecteur de données (2).

5. Procédé selon l'une des revendications précédentes, **caractérisé en ce que** le compteur de consommation (3) envoie les données au collecteur de données (2) à intervalles de temps fixes.

6. Procédé selon l'une des revendications précédentes, **caractérisé en ce que** les données sont classées et stockées dans le collecteur de données (2) en fonction de leur contenu.

7. Procédé selon la revendication 6, **caractérisé en ce que** le contenu des données cryptées est identifié dans une zone non cryptée.

8. Système comprenant au moins un compteur de consommation, de préférence une pluralité de compteurs de consommation (3), et un collecteur de données (2), le collecteur de données comprenant les éléments suivants :
un module de réception de données (22) destiné à recevoir des données de consommation et/ou des données de capteur de l'au moins un compteur de consommation (3), de préférence de la pluralité de compteurs de consommation (3),
un module de traitement de données (23) destiné à traiter les données de consommation et/ou les données de capteur reçues,
un module de transmission de données (24) destiné à envoyer les données de consommation et/ou les données de capteur traitées à un système de tête de réseau (1), et
une mémoire (21) destinée à conserver les données de consommation et/ou les données de capteur à transmettre au système de tête de réseau (1), **caractérisé en ce que**
le collecteur de données (2) et l'au moins un compteur de consommation (3) sont conçus pour fonctionner conformément au procédé selon l'une des revendications précédentes.

9. Collecteur de données (2) selon la revendication 8, **caractérisé en ce que**
la mémoire (21) comprend un support de stockage non volatile.
